# EUROPÄISCHE PATENTSCHRIFT

(11) **EP 0 536 359 B1**
(45) Veröffentlichungstag und Bekanntmachung des Hinweises auf die Patenterteilung: **12.07.1995**
(21) Anmeldenummer: 92908476.2
(22) Anmeldetag: 13.04.1992
(51) Int. Cl.: B01D 29/05, B01D 29/50, B01D 29/96, B29C 47/68

(54) **SIEBWECHSELKASSETTE**
FILTER-CHANGE MODULE
MODULE DE CHANGEMENT DE TAMIS

(30) Priorität: 23.04.1991 DE 9105000 U
(43) Veröffentlichungstag der Anmeldung: 14.04.1993
(73) Patentinhaber: TRENDELKAMP, Josef, D-48356 Nordwalde (DE); VELTEL, Jürgen, D-48329 Havixbeck (DE)
(72) Erfinder: TRENDELKAMP, Josef, D-48356 Nordwalde (DE); VELTEL, Jürgen, D-48329 Havixbeck (DE)
(74) Vertreter: Hoffmeister, Helmut, Dr. Dipl.-Phys.
(86) Internationale Anmeldenummer: EP9200832
(87) Internationale Veröffentlichungsnummer: WO9218220

(56) Entgegenhaltungen:
- EP-A- 0 399 086
- DE-U- 9 011 605
- US-A- 4 814 186

## Beschreibung

Die Erfindung betrifft eine Siebwechselkassette für einen Extruder. Die Siebwechselkassette besteht aus einem Gehäuse, das wenigstens einen quer zum - im Mittel horizontal - verlaufenden Fließweg des Extrudats angeordnete Bohrung besitzt, in der jeweils ein Siebträgerbolzen mit einem Wechselsieb verschiebbar angeordnet ist.

Siebwechselkassetten werden dem Ausgang eines Extruders nachgeschaltet, so daß der verflüssigte Thermoplast bei dem Extruder zunächst durch ein Sieb gelangt, das als Einzelsieb oder als Siebpaket ausgestaltet sein kann. Mit dem Sieb werden Verunreinigungen entfernt. Das Sieb bzw. die Siebe und die sie stützenden Sieblochplatten werden in dem Siebträgerbolzen auswechselbar getragen. Dabei kann mit einer Siebwechselkassette gearbeitet werden, die nur einen Siebwechselbolzen enthält, so daß der Extrudiervorgang für das Siebwechseln jeweils unterbrochen wird (vgl. EP-A 0 399 086). Es ist auch bekannt, Siebwechselkassetten mit zwei übereinanderliegenden Siebträgerbolzen auszustatten, wobei entsprechende Fließwege des Extrudats durch den oberen und/oder unteren Siebbolzen führen und durch die entsprechende Gestaltung des Siebbolzens jeweils bei Auswechslung einer der beiden Siebe versperrt ist (vgl. DE-U-9 011 605). Bei derartigen, bekannten Siebwechselkassetten wird der Extrudiervorgang nicht unterbrochen.

Verfahrensbedingt ist es, daß beim Anfahren eines neuen Extrudierprofils, beispielsweise bei Thermoplast-Wechsel, anfänglich eine erhebliche Menge von Fehl-Extrusionsprofil anfällt, die nicht in die dem Extrusionskopf nachgeschalteten Kalibrier-Werkzeuge gelangen soll. Es wird - wie bekannt - deshalb mit Anfahrventilen und Anfahrausgängen im Bereiche des Extrusionskopfes gearbeitet, in die die jeweiligen unbrauchbaren Anfangsmengen geleitet werden.

Nachteilig ist, daß bei den bekannten Siebwechselkassetten die Siebwechselkassette und die Ableitungsvorrichtungen für das unbrauchbare Extrudat getrennt ausgeführt sind, so daß die Siebwechselkassetten relativ kostspielig auszuführen sind.

Es stellt sich die Aufgabe, unter Ausnutzung der vorhandenen Siebwechselkassetten eine erleichterte Anfahrprozedur durchführen zu können.

Diese Aufgabe wird erfüllt durch eine Siebwechselkassette der eingangs genannten Art, bei der der Siebträgerbolzen neben dem Wechselsieb wenigstens ein fest eingebautes Hahnküken trägt, wobei das Gehäuse einen Siebträgerbolzen oder eine Anfahraustrittsbohrung trägt; bei dem Siebträgerbolzen ist die Anfahraustrittsbohrung mit dem vom Siebträgerbolzen getragenen Hahnküken mit einem Eintrittskanal für das Extrudat in definierter Stellung des Siebträgerbolzens verbindbar.

Der Grundgedanke der Erfindung besteht demnach darin, den Siebträgerbolzen, gegebenenfalls in verlängerter Form, mit einer Umlenkvorrichtung, hier Hahnküken genannt, so auszustatten, daß er neben den beiden Stellungen "Betrieb" und "Wechsel" noch eine dritte Stellung einnehmen kann, bei der das Kahnküken in definierter Stellung den Strom des nicht erwünschten Extrudats beim Anfahren aufnimmt.

Mit dieser Anordnung läßt sich sowohl ein diskontinuierlicher (ein Siebträgerbolzen) als auch ein kontinuierlicher Betrieb (zwei Siebträgerbolzen) durchführen. Im letzteren Falle wird vorzugsweise der untere Siebträgerbolzen mit einem Hahnküken versehen.

Die Erfindung bietet weiterhin die Möglichkeit, eine Ausführungsform zu schaffen, bei der in einem Siebträgerbolzen eine Austrittsbohrung für den Anfahrbetrieb vorgesehen ist. Hierbei wird das Hahnküken so ausgeführt, daß es eine Verbindung zwischen einer Austrittsbohrung am Ende des Siebträgerbolzens und der Eintrittsleitung herstellt. Vorzugsweise wird hierbei die Austrittsbohrung am unteren Ende des senkrecht angeordneten Siebträgerbolzens vorgesehen.

Ausführungsbeispiele der Erfindung sind in der beigefügten Zeichnung dargestellt. Die Figuren der Zeichnung zeigen:
Figur 1 eine Siebwechselkassette in perspektivischer Ansicht;
Figuren 2a-2d verschiedene Stellungen in schematischer Darstellung der Siebwechselkassette gemäß Figur 1, nämlich
   2a die Anfahrstellung,
   2b die Übergangsstellung,
   2c die Filtrierstellung und
   2d die Siebwechselstellung;
Figuren 3a, 3b und 3c Schnitte durch die Siebwechselkassette mit verschiedenen Stellungen des Siebträgerbolzens, nämlich
   3a die Anfahrstellung,
   3b die Übergangsstellung,
   3c die Filtrierstellung;
Figuren 4a und 4b eine Ausführungsform einer Siebwechselkasette mit nur einem Siebträgerbolzen, nämlich
   4a die Anfahrstellung,
   4b die Filtrierstellung;
Figuren 5a und 5b Schnitte durch die Siebwechselkassette gemäß Figuren 4a/4b in zwei verschiedenen Stellungen des Siebwechselbolzens, nämlich
   5a die Anfahrstellung
   5b die Filtrierstellung;
Figur 6 eine Siebwechselkassette mit einer weiteren Bohrung im Siebträgerbolzen.

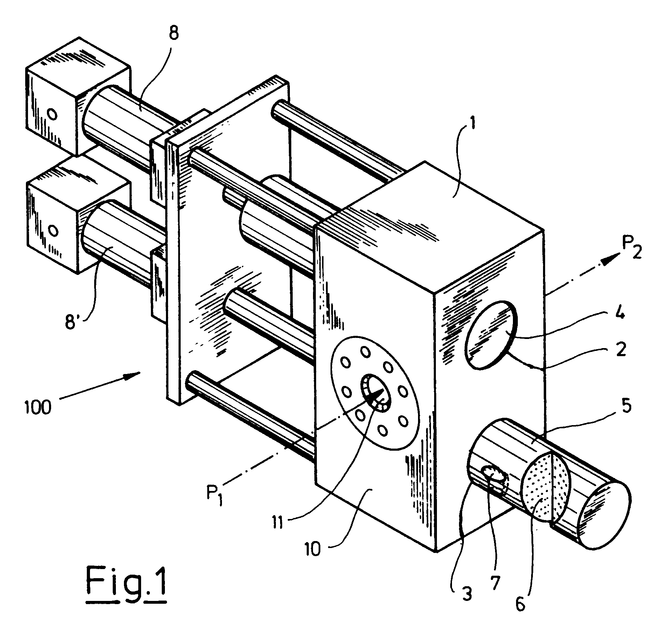

Figur 1 zeigt eine Siebwechselkassette für einen Extruder, der im Bereich der Stirnseite 10 eines Gehäuses 1 angeflanscht wird. Der Pfeil P1 bezeichnet den Eintritt des geschmolzenen Thermoplasten, während der Pfeil P2 den Austritt des Extrudats darstellt. Der Fließweg innerhalb des Gehäuses wird im folgenden noch erläutert werden. In dem Gehäuse sind quer zum im Mittel horizontal verlaufenden Fließweg der Schmelze bzw. des Extrudats angeordnete Bohrungen 2, 3 vorhanden, in denen jeweils ein Siebträgerbolzen 4 bzw. 5 mit je einem Wechselsieb 6 verschiebbar angeordnet ist. Der untere Siebträgerbolzen 5 ist im vorliegenden Falle länger als der obere Siebträgerbolzen 4. Der untere Siebträgerbolzen 5 umfaßt zwischen seinem freien Ende und dem Wechselsieb 6 noch ein fest eingepaßtes Hahnküken 7 mit einer durchgehenden Bohrung.

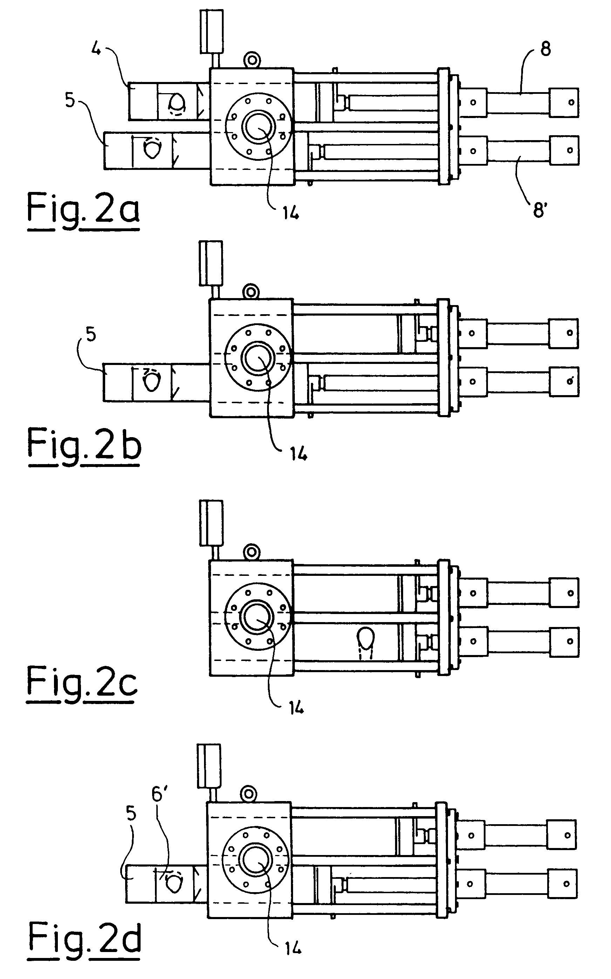

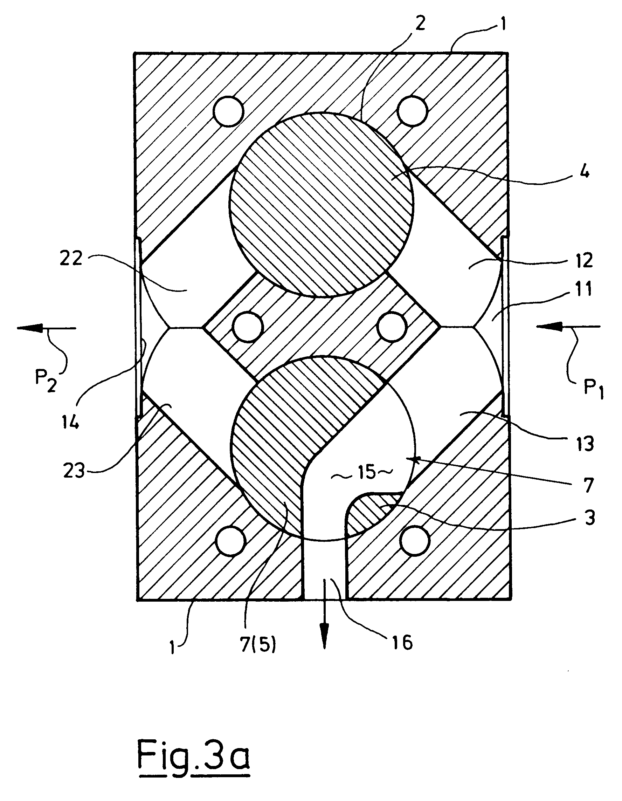

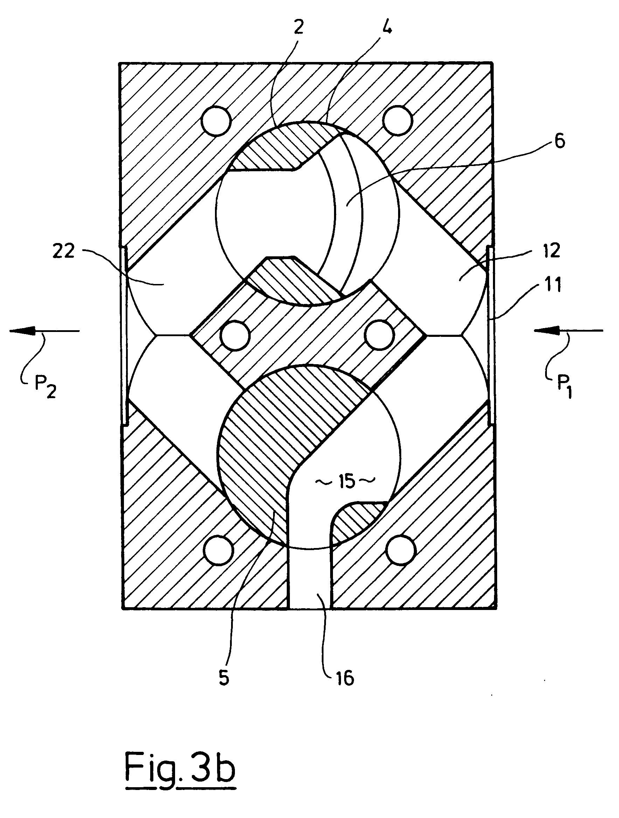

Anhand der Figuren 2a bis 2d und 3a bis 3c wird die Erfindung in ihrer Funktion weiter erläutert.

Die Figuren 2a bis 2d zeigen die Siebwechselkassette gemäß Figur 1, jedoch von der Austrittseite her gesehen, während die Figuren 3a bis 3c die Siebwechselkassette von der Seite her im Schnitt zeigen.

Die Siebträgerbolzen 4, 5 sind mit Hilfe von Hydraulikzylindern 8, 8' aus dem Gehäuse ein- und ausfahrbar angeordnet. Bei der Anfahrstellung gemäß den Figuren 2a bzw. 3a ist der obere Siebträgerbolzen 4 in eine Stellung gefahren, die den Kanal für die Thermoplast-Schmelze im oberen Bereich verschließt. Dieser Kanal besteht aus einer Eintrittsöffnung 11 und zwei Zweigkanälen 12, 13, von denen der obere zur oberen Bohrung 2 und der untere (13) zur unteren Bohrung 2 führt. An die Bohrungen 2, 3 schließen sich weitere Zweigkanäle 22 bzw. 23 an, die wiederum in der Austrittsöffnung 14 enden.

Wie erkennbar, ist der obere Siebträgerbolzen 4 so gestellt, daß er die Verbindung zwischen den Zweigkanälen 12 und 22 verschließt. Der untere Siebträgerbolzen 5 dagegen ist soweit verschoben, daß das Hahnküken 7, das von ihm getragen wird, genau die Stellung einnimmt, die den Zweigkanal 13 mit einer Anfahraustrittsbohrung 16 verbindet. Hierzu ist die Bohrung 15 innerhalb des Hahnkükens 7 vorgesehen.

In der Anfahrstellung gemäß Figur 3a kann demnach das zunächst an der Eintrittsöffnung 11 anfallende Extrudat ohne weiteres über die Austrittsöffnung 16 entfernt werden.

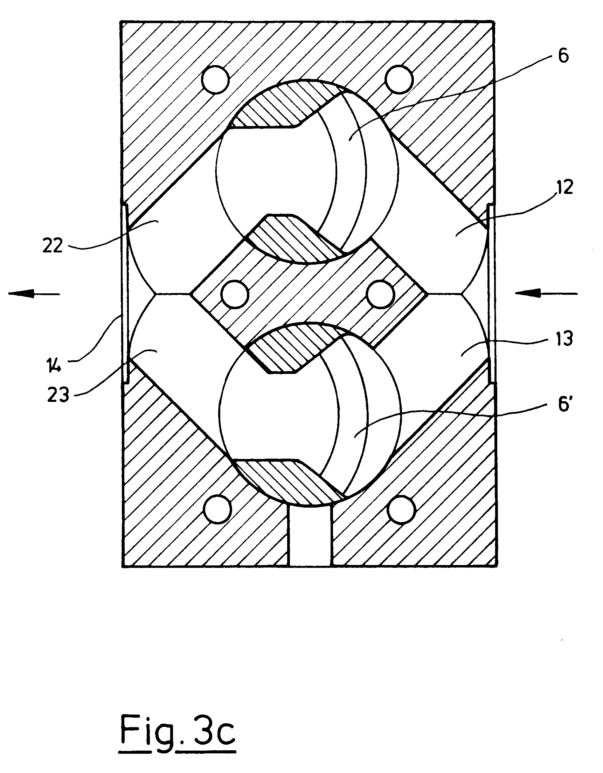

In der Übergangsstellung gemäß den Figuren 2b/3b wird der obere Siebträgerbolzen 4 soweit verschoben, daß eine Siebplatte, d.h. das Wechselsieb 6, so in der Bohrung 2 verschoben wird, daß die beiden Zweigkanäle 12 und 22 miteinander verbunden sind, die Thermoplast-Schmelze jedoch durch das Sieb 6 hindurchfließen muß, wenn es nicht durch die Anfahraustrittsbohrung 16 austreten soll. In der eigentlichen Arbeits- und Filtrierstellung gemäß Figuren 2c/3c sind beide Siebwechselbolzen in ihrer äußersten Stellung angelangt. Hierbei ist eine Siebplatte 6'auch in den durch die Zweigkanäle 13 und 23 gebildeten Kanal geschaltet. Die beiden Wechselsiebe 6 bzw. 6' werden gleichmäßig durch den Strom des Thermoplasten beaufschlagt, der durch sie zur Austrittsöffnung 14 strömt.

Ist das Wechseln eines Siebes erforderlich, so wird, wie an sich bekannt, die Siebwechselstellung eingenommen, wie sie in Figur 2d dargestellt ist. Der untere Siebwechselbolzen 5, hier als Beispiel, wird ausgefahren, wobei das oben liegende Wechselsieb 6 die Aufgabe die Siebens und Hindurchlassens der Thermoplast-Schmelze übernimmt. Das sich im unteren Siebwechselbolzen 5 befindende Sieb 6' kann ausgewechselt werden.

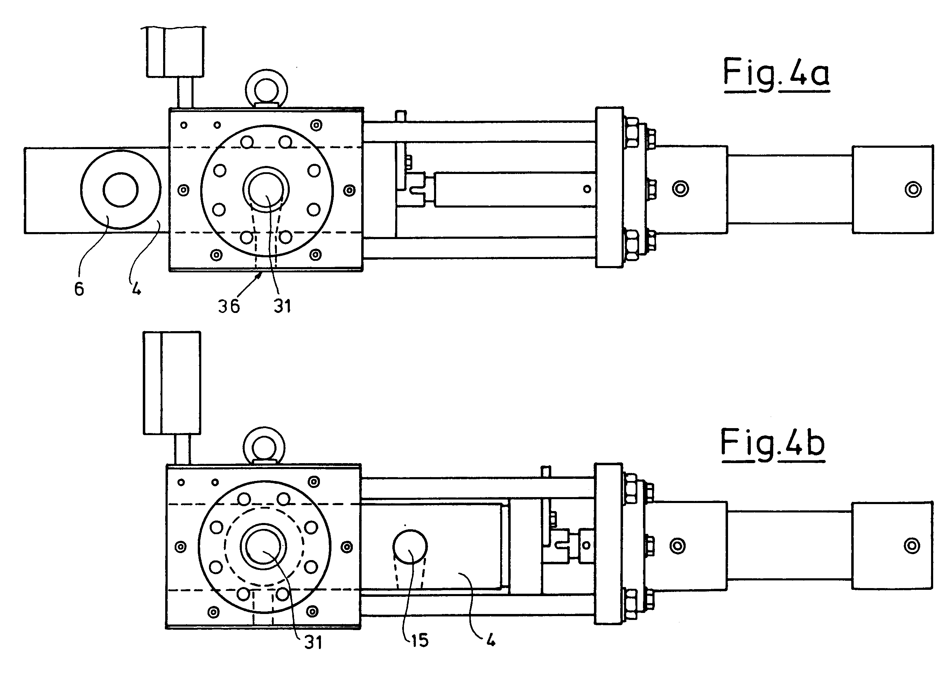

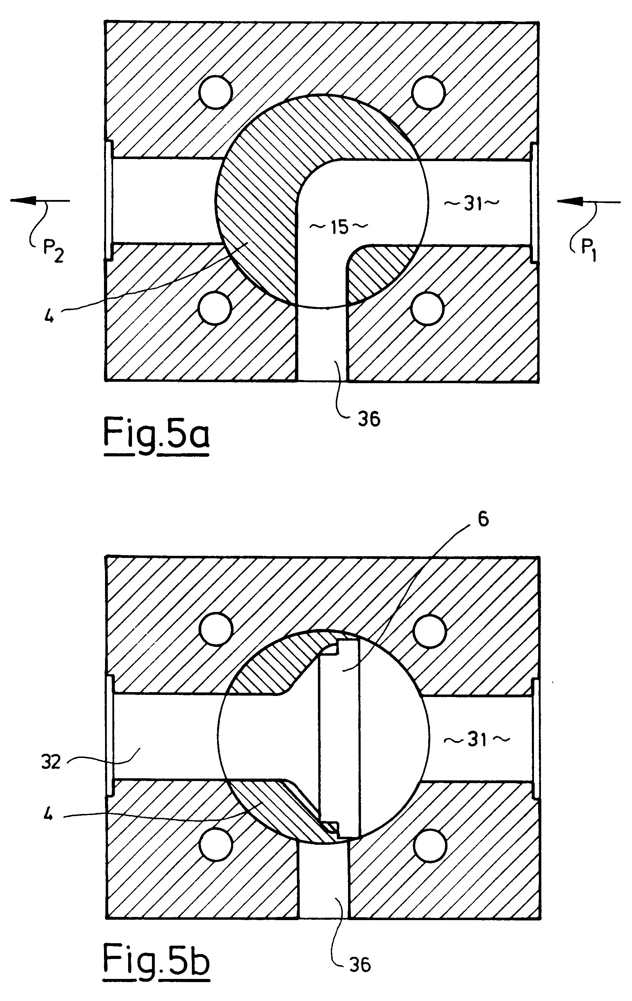

In den Figuren 4a/b und 5a/b ist in analoger Weise eine diskontinuierliche Siebwechseleinrichtung dargestellt. Hier ist ein einziger Siebträgerbolzen 4 vorhanden. Ein Wechselsieb 6 befindet sich im linken Teil der Figur 4a, während das Hahnküken, hier verkörpert durch eine durch das massive Material des Siebträgerbolzens 4 hindurchgehende Bohrung 15, sich im rechten Teil des Siebträgerbolzens 4 befindet.

In der sogenannten Anfahrstellung gemäß den Figuren 4a/5a wird die Bohrung 15 mit dem Siebträgerbolzen 4 so eingestellt, daß sie einen Eintrittskanal 31 mit einer Anfahraustrittsbohrung 36 verbindet. In der Filtrierstellung gemäß den Figuren 4b/5b wird der Siebträgerbolzen 4 so verschoben, daß das Wechselsieb 6 den Eintrittskanal mit der dem Austrittskanal 32 verbindet, wobei die Thermoplast-Schmelze durch die Siebanordnung 6 hindurchgelangt, wie dies an sich bekannt ist.

Das Auswechseln des Siebes, das eine Unterbrechung des Extrudierbetriebes erfordert, geschieht bei herausgefahrener Siebplatte, wobei der Siebträgerbolzen 4 noch weiter nach links verschoben wird, so daß der massive Zylinder des Bolzens 4 die Verbindung zwischen den Kanälen 31 und 32 bzw. 31 und 36 unterbricht (nicht dargestellt).

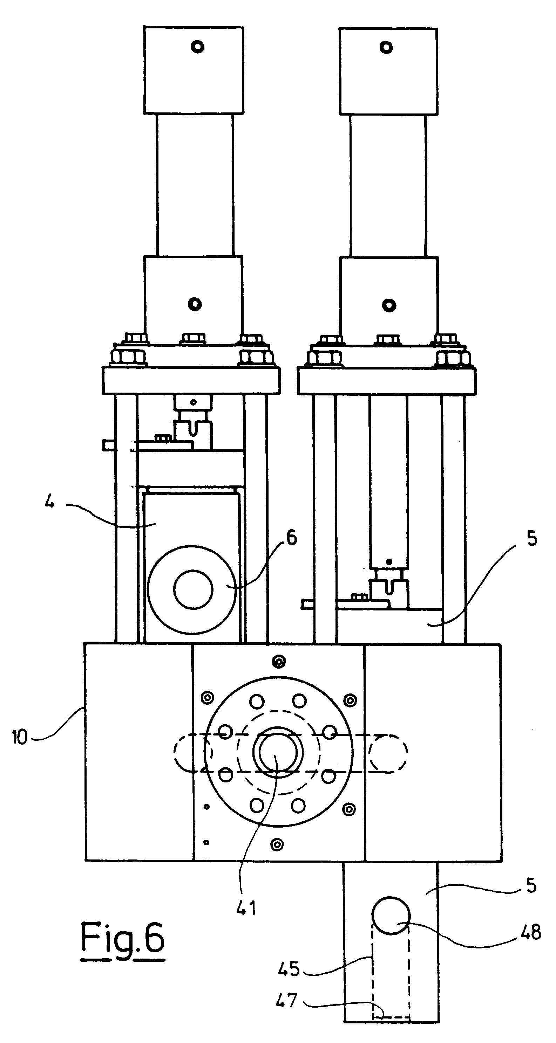

In der Figur 6 ist eine weitere Alternative dargestellt. Hierbei ist ein senkrecht im Gehäuse 10 verlaufender Siebträgerbolzen 4 mit einem Wechselsieb 6 versehen, das, wie die Figur 6 zeigt, in der oberen Hälfte des Bolzens 4 angeordnet ist. Ein weiterer Siebträgerbolzen 5 ist ebenfalls senkrecht neben dem Siebträgerbolzen 4 angeordnet. Die Wege des geschmolzenen Thermoplasten ergeben sich analog zu der Figur 3. Der Siebträgerbolzen 5 weist eine Bohrung 45 auf, die durch den Siebträgerbolzen 5 hindurchgeführt ist und zwei Öffnungen 48 und 47 aufweist. Die beiden Öffnungen 48 und 47 verbinden über die Bohrung 45 einen Eintritt 41 auf der Vorderseite des Gehäuses 1 mit dem Eingang 48 der Bohrung 45, die unten im Siebträgerbolzen 5 angeordnet ist, wie aus der gestrichelt gezeichneten Kanalführung erkennbar ist. Die Bohrung 45 ist mit dem Ausgang 47 als Austritt für das unerwünschte Extrudat verbunden. Dieses kann dann ohne weiteres nach unten abfließen.

Es sei darauf hingewiesen, daß der Begriff "Hahnküken" sich nicht nur auf ein zusätzlich mit dem Siebträgerbolzen zu verbindendes Element bezieht, sondern auch auf eine entsprechende Bohrung, die in das massive, einstückige Material des Siebträgerbolzens eingebracht ist und die Funktion eines Hahnkükens im Sinne der Erfindung erfüllt.

## Patentansprüche

1. Siebwechselkassette für einen Extruder, bestehend aus einem Gehäuse (1) und wenigstens einer quer zum im Mittel horizontal verlaufenden Fließweg des Extrudats angeordneten Bohrung (2; 3), in der jeweils ein Siebträgerbolzen (4; 5) mit einem Wechselsieb (6) verschiebbar angeordnet ist,
dadurch gekennzeichnet, daß der Siebträgerbolzen (4; 5) neben dem Wechselsieb (6) wenigstens ein fest eingebautes Hahnküken (7; Bohrungen 15 bzw. 45) trägt und daß eine Anfahraustrittsbohrung (16; 36; 46) mit dem vom Siebträgerbolzen getragenen Hahnküken und einem Eintrittskanal (13; 31) für das Extrudat in definierter Stellung des Siebträgerbolzens verbindbar ist.

2. Siebwechselkassette nach Anspruch 1, dadurch gekennzeichnet, daß das Gehäuse (1) die Anfahraustrittsbohrung (16; 36) trägt.

3. Siebwechselkassette nach Anspruch 1 oder 2, dadurch gekennzeichnet, daß in einem Gehäuse (1) zwei Siebträgerbolzen (4, 5) vorgesehen sind, von denen der eine, vorzugsweise der untere, mit einem Hahnküken (7) versehen ist.

4. Siebwechselkassette nach einem der Ansprüche 1 - 3, dadurch gekennzeichnet, daß am Ende wenigstens eines Siebträgerbolzens (4) eine Austrittsbohrung (46) für den Anfahrbetrieb vorgesehen ist, die mit dem Eintrittskanal (31) verbindbar ist.

5. Siebwechselkassette nach Anspruch 4, dadurch gekennzeichnet, daß der oder die Siebträgerbolzen (4) in senkrechter Anordnung im Gehäuse angeordnet sind und daß sich die Austrittsbohrung am unteren Ende befindet.

## Claims

1. A screen changer for an extruder and comprising a casing (1) and at least one bore (2, 3) disposed transversely on the on average horizontal flow path of the extrudate, a screen carrier pin (4; 5) which has a change screen (6) being displaceably disposed in the bore, characterised in that the screen carrier pin (4; 5) carries in addition to the change screen (6) at least one fixed plug (7; bores 15, 45) and a start-up exit bore (16; 36; 46) can be connected to the plug and to an extrudate entry channel (13; 31) when the screen carrier pin is in a defined position.

2. A screen changer according to claim 1, characterised in that the casing (1) is formed with the start-up exit bore (16; 36).

3. A screen changer according to claim 1 or 2, characterised in that two screen carrier pins (4, 5) are provided in a casing (1) and one such pin, preferably the lower pin, has a plug (7).

4. A screen changer according to any of claims 1 to 3, characterised in that a start-up exit bore (46) is provided at the end of at least one screen carrier pin (4) and is connectable to the entry channel (31).

5. A screen changer according to claim 4, characterised in that the or each screen carrier pin (4) is arranged vertically in the casing and the exit bore is disposed at the bottom end.

## Revendications

1. Module de changement de tamis pour extrudeuse, se composant d'un boîtier (1) et d'au moins un alésage (2; 3), ménagé transversalement au trajet d'écoulement de l'extrudat à tracé horizontal dans le milieu, dans lequel ou dans chacun desquels respectivement un tourillon (4; 5) de support de tamis à tamis interchangeable (6) est disposé à coulissement,
caractérisé en ce que
le tourillon (4; 5) de support de tamis porte, en plus du tamis interchangeable (6) au moins un boisseau (7; alésages 15 ou 45) monté de façon fixe et en ce que
un alésage (16; 36; 46) de sortie de démarrage peut être relié, dans une position définie du tourillon de support de tamis, au boisseau porté par le tourillon de support de tamis et à un canal d'entrée (13; 31) de l'extrudat.

2. Module de changement de tamis selon la revendication 1, caractérisé en ce que
le boitier (1) porte l'alésage (16; 36) de sortie de démarrage.

3. Module de changement de tamis selon la revendication 1 ou 2, caractérisé en ce que
deux tourillons (4, 5) de support de tamis, parmi lesquels l'un, de préférence le tourillon inférieur, est pourvu d'un boisseau (7), sont prévus dans le boîtier.

4. Module de changement de tamis selon l'une des revendications 1 à 3, caractérisé en ce que
un alésage (46) de sortie pour le fonctionnement de démarrage, qui peut être relié au canal d'entrée (31), est prévu à l'extrémité d'au moins un tourillon (4) de support de tamis.

5. Module de changement de tamis selon la revendication 4, caractérisé en ce que
le tourillon ou les tourillons (4) de support de tamis sont disposés selon une disposition verticale et en ce que l'alésage de sortie se trouve à l'extrémité inférieure.
